# EUROPÄISCHE PATENTSCHRIFT

(11) **EP 1 068 060 B1**
(45) Veröffentlichungstag und Bekanntmachung des Hinweises auf die Patenterteilung: **11.09.2002**
(21) Anmeldenummer: 99915677.1
(22) Anmeldetag: 20.03.1999
(51) Int. Cl.: B29C 45/17

(54) **FORMSCHLIESSEINHEIT FÜR EINE SPRITZGIESSMASCHINE**
MOLD CLOSING UNIT FOR AN INJECTION MOLDING MACHINE
UNITE DE FERMETURE DE MOULE POUR UNE PRESSE D'INJECTION

(30) Priorität: 24.03.1998 DE 19812741
(43) Veröffentlichungstag der Anmeldung: 17.01.2001
(73) Patentinhaber: Hehl, Karl, 72290 Lossburg (DE)
(72) Erfinder: Hehl, Karl, 72290 Lossburg (DE)
(74) Vertreter: Reinhardt, Harry
(86) Internationale Anmeldenummer: EP9901869
(87) Internationale Veröffentlichungsnummer: WO99048667

(56) Entgegenhaltungen:
- US-A- 4 281 977
- PATENT ABSTRACTS OF JAPAN vol. 16, no. 471 (M-1318), 30. September 1992 (1992-09-30) -& JP 04 169216 A (FANUC LTD), 17. Juni 1992 (1992-06-17)

## Beschreibung

Die Erfindung betrifft eine Formschließeinheit in einer Spritzgießmaschine zur Verarbeitung plastifizierbarer Massen, wie Kunststoffe, pulverförmige oder keramische Massen nach dem Oberbegriff des Anspruches 1, wobei diese Formschließeinheit eine Formhöhenverstelleinrichtung aufweist.

Unter Formhöhe wird die Höhe der Form verstanden, die in Schließrichtung gemessen ist und dem Abstand zwischen beweglichem Formträger und stationärem Formträger bei geschlossener Form entspricht. Derartige Verstelleinrichtungen sind bei Spritzgießmaschinen erforderlich, bei denen die Schließbewegung und der Aufbau der Schließkraft über einen Kniehebel erfolgen, da die Abstützplatte für den Kniehebel in bezug auf das eingebaute Spritzgießwerkzeug so positioniert werden muß, daß beim Schließen des Werkzeugs oder der Form der Kniehebel in Strecktage kommt und damit seine maximale Schließkraft aufbringen kann. Ferner sind Formhöhenverstellungen erforderlich, wenn Schließwege optimiert werden, wenn auf ein- und derselben Maschine Spritzgleßformen mit unterschiedlicher Formhöhe eingesetzt werden.

Aus PATENT ABSTRACTS OF JAPAN, vol. 16, No. 471 (M-1318), 1992-09-30) und der JP 04 169216 A ist eine dem Oberbegritf des Anspruches 1 zugrundeliegende Formschließeinheit mit einer Formhöhenverstellung bekannt. Diese Formhöhenverstellung wird wie üblich in Verbindung mit einem Kniehebel als Schließmechanismus eingesetzt. Am beweglichen Formträger wird eine elektromagnetisch betätigbare Fixiereinrichtung und am Abstützelement für den Kniehebelmechanismus eine manuell betätigbare Fixiereinrichtung zum lösbaren Fixieren des Abstützelements vorgesehen. Wird bei festgelegtem beweglichem Formträger und gelöstem Abstützelement der den Kniehebel antreibende Schließmotor betätigt, wird das Abstützelement in die für die neue Formhöhe erforderliche Stellung verschoben, in der bei in Strecklage befindlichem Kniehebel die Schließkraft aufgebracht werden kann. Die Festlegung des Abstützelements erfolgt nicht formschlüssig, worunter nach mehreren Zyklen zumindest die Präzision bei der wiederholten Aufbringung der Schließkraft leidet. Vor allem aber hat diese Formhöhenverstellung keinen Einfluß auf den Öffhungsweg zum Öffnen der Form, da dieser von der Bewegung des Kniehebels und nicht von der Stellung des Abstützelements abhängig ist

Es sind Formschließeinheiten mit Formhöhenverstellungen bekannt, wobei an Holmen, die meist am stationären Formträger festgelegt sind und dem beweglichen Formträger zur Führung dienen, Gewindeabschnitte vorgesehen sind, die mit Muttern in Verbindung stehen. Diese Muttern werden über einen gesonderten Antrieb zur Formhöhenverstellung angetrieben. Die Muttern weisen auf ihrer Außenseite einen Zahnkranz auf, so daß sie entweder mit einem Zahnkranz oder einem Zahnriemen betätigt werden können. (US-A 4,281,877; Prospekt "Elektra S-Serie" (S. 5) der Ferromatic Milacron Maschinenbau GmbH, 79364 Malterdingen). Während eines Einspritzzyklusses ist das Abstützelement für den beweglichen Formträger mittels der Muttem festgelegt. Die Schließeinrichtung bewegt damit lediglich den beweglichen Formträger, während das Abstützelement ortsfest bleibt. Das Abstützelement wird lediglich entlang der Führungselemente bewegt, wenn die Formhöhe verändert werden soll. Dies ist im allgemeinen dann der Fall, wenn die Spritzgießform gewechselt wird.

Zur Formhöhenverstellung und Verriegelung einer Abstützplatte für den Schließmechanismus ist es von der Engel Vertriebs GmbH, A-4311 Schwertberg, Österreich bekannt, die Holme mit Rillen zu versehen und an diesen Rillen zwei Halbmuttem dadurch festzuspannen, daß die Hafbmuttern in radialer Richtung aufeinander zu bewegt werden, bis sie zur Anlage an den gerillten Bereich der Führungsholme kommen.

Von der Firma Husky Injection Molding Systems ist es ferner bekannt, eine derartige Verriegelung mit einem Bajonettverschluß zu erzielen. Der Holm besitzt hierzu Bereiche, in die ein Schließkolben eingreifen kann, sowie Bereiche, entlang derer der radial auf den Führungsholmen bewegliche Schließkolben gleiten kann. Durch eine Drehung des Schließkolbens wird ein formschlüssiger Eingriff bewirkt, so daß an diesem Kolben zugleich zumindest ein Teil der Schließkraft ebenfalls aufgebracht werden kann.

Aus der DE 24 29 570 B1 ist eine Spritzgießmaschine bekannt, bei der zum Schließen der Form zwei Druckzylinder verwendet werden. Ein Druckzylinder dient zur Verschiebung der bewegbaren Formplatte, ein weiterer zum Aufbringen der Schließkraft. Dementsprechend werden auch während der Spritzgießzyklen zwei Platten gemeinsam als beweglicher Formträger bewegt. Ein bei Änderung der Formhöhe verstellbares Abstützelement ist nicht vorgesehen. Die Feststelleinrichtung wird nur betätigt, wenn der Kolben des Zylinders seine Hubbewegung beendet hat und ergänzend nun die Schließkraft über den Kolben aufgebracht werden soll.

Aus der DE 42 43 735 C2 ist eine Zweiplattenmaschine bekannt, bei der zur Erzielung des Formschlusses die bewegliche Formplatte auf den stationären Formträger zu gezogen wird. Der bewegliche Formträger ist von den Führungsholmen, die beim Aufbringen der Schließkraft erforderlich sind, trennbar und kann mit diesen verriegelt werden. ist allerdings die Verriegelung erfolgt, ist allein noch der Schließzylinder für die Formschlußbewegung und die Aufbringung der Schließkraft zuständig. Eine Veränderung und damit Optimierung der Schließkraft ist damit nicht möglich.

In parallelen Verfahren wurde zudem noch die DE 30 42 712 entgegengehalten, die allerdings eine gänzlich andere Aufgabe besitzt, da dort an Eingriffsnuten der Führungsholme ein Verriegelungsmechanismus für den Schutzschieber angesteuert und verriegelt wird, der den Formspannraum abdeckt.

Ausgehend von diesem Stand der Technik liegt der vorliegenden Erfindung die Aufgabe zugrunde, eine vielseitigere Formschließeinheit zu schaffen.

Diese Aufgabe wird durch eine Formschließeinheit mit den Merkmalen des Anspruches 1 gelöst.

Dem beweglichen Formträger ist eine Feststelleinrichtung zugeordnet, so daß sich der bewegliche Fomiträger in seiner jeweiligen Position beliebig festlegen läßt. Wird die Verriegelung des Antriebs von den Holmen gelöst, kann der Antrieb mit seiner jeweiligen Abstützung relativ zu den Holmen verstellt werden, so daß eine Formhöhenverstellung eintritt. Hierbei kommt es nicht darauf an, ob es sich bei der Spritzgießmaschine um ein Zweiplattensystem handelt, bei der der Schließmechanismus am stationären Formträger angeordnet ist, oder um ein Dreiplattensystem, bei dem ein gesondertes Abstützelement für den Antrieb der Schließeinrichtung vorgesehen ist. Da die üblicherweise für eine Hauptachse eingesetzte Antriebseinrichtung nun für eine Nebenfunktion eingesetzt werden kann, kann auf einen zusätzlichen Antrieb zur Formhöhenverstellung verzichtet werden. Zusätzliche Führungselemente sind nicht erforderlich, da die ohnehin vorhandenen Führungselemente, meist die Führungssäulen, verwendet werden können. Durch den Einsatz der Formhöhenverstelleinrichtung können sich jedoch in jedem Zyklus die Druckaufbauzeiten in der Größenordnung von mehreren Zehntelsekunden reduzieren

Vorzugsweise wird dort, wo auf Dauer die höheren Kräfte aufgebracht werden müssen, also im üblichen Gebrauchszustand, eine formschlüssige Verbindung vorgesehen, die bedarfsweise zur Formhöhenverstellung gelöst werden kann. In dem anderen Bereich, in dem nur kurzfristig eine Festlegung des beweglichen Formträgers erfolgen muß, um die Formhöhenverstellung zu bewirken, kann hingegen auf den Führungselementen oder am Maschinenfuß der bewegliche Formträger nur durch eine kraftschlüssige Verbindung festgelegt werden.

In beiden Fällen, vor allem aber bei der formschlüssigen Wirkverbindung der Feststelleinrichtung werden vorzugsweise Spannzangen eingesetzt. Die Spannzangen haben den Vorteil, daß infolge das Festspannens eine spielfreie Klemmung zwischen Führungselementen und insbesondere Abstützelement gewährleistet ist, da entgegen den bekannten Gewindeversteltungen nicht ein Gewindespiel mit einzurechnen ist. Dadurch kann gleichzeitig die Präzision der gesamten Spritzgießmaschine trotz vorhandener Formhöheneinstellung gesteigert werden. Zur Sicherheit sind die Einrichtungen so aufgebaut, daß die Grundfunktion des Spritzgießens stets selbsttätig unter Wirkung elastischer Mittel gesichert wird.

Weitere Vorteile ergeben sich aus den Unteransprüchen.

### Kurzbeschreibung der Figuren

- Fig. 1: Eine schematische Darstellung einer Spritzgießmaschine In Seitenansicht in Gebrauchsfunktion,
- Fig. 2: die Spritzgießmaschine gemäß Fig. 1 mit verklemmten beweglichen Formträger,
- Fig. 3: eine Darstellung gemäß Fig. 1 in Gebrauchsfunktion mit verstelltem Abstützelement,
- Fig. 4,5: die Spannzange der Klemmeinrichtung zur Festlegung des Abstands a in geöffneter und geschlossener Stellung,
- Fig. 6,7: die Feststelleinrichtung am beweglichen Formträger in geöffneter und verklemmter Stellung,
- Fig. 8: ein Ausführungsbeispiel an einer holmlosen Spritzgießmaschine.

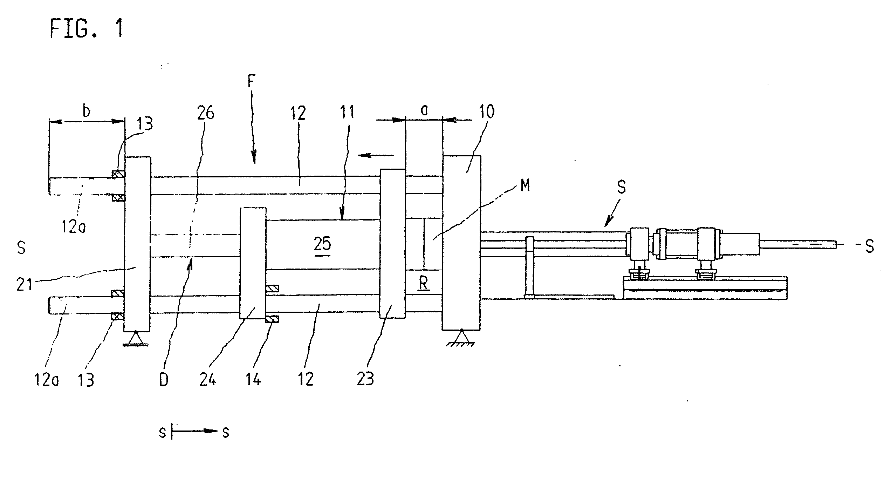

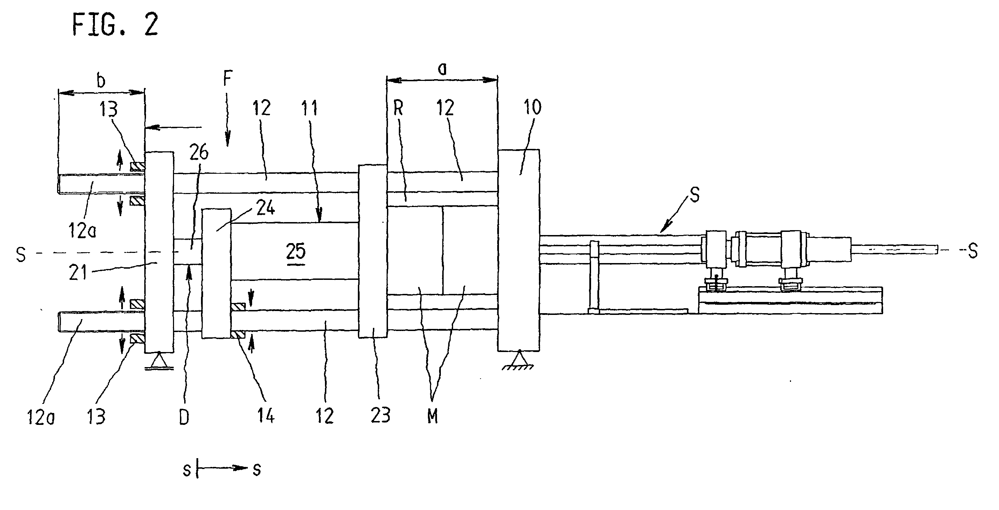

Fig. 1 zeigt schematisch eine Spritzgießmaschine mit einer Spritzgießeinheit S und einer Formschließeinheit F. Die Formschließeinheit besitzt einen stationären Formträger 10, dessen Lage z.B. gegenüber dem Maschinenfuß fest ist und im vorliegenden Fall durch ein ortsfestes Lager angedeutet ist. Femer ist ein beweglicher Formträger vorgesehen, der im vorliegenden Fall eine bauliche Einheit bestehend aus der Aufspannplatte 23, dem Zylinder 25 des Antriebs D und einer Spannplatte 24 ist. Formaufspannplatte 23 und Spannplatte 24 sind miteinander verspannt, so daß sich eine präzise an den Führungselementen12 geführte Einheit ergibt, die den beweglichen Formträger 11 bildet. Die Formaufspannplatte 23 des beweglichen Formträgers 11 und der stationäre Formträger 10 schließen zwischen sich den Formspannraum R ein. In diesem Formspannraum können Spritzgießformen M veränderlicher Höhe (Fig. 1, Fig. 2) eingesetzt werden. Je nach Höhe der Spritzgießform M ist der Abstand a zwischen beweglichem Formträger 11 und stationärem Formträger 10 größer oder kleiner. Die Höhe der Form, die diesen Abstand a bestimmt, wird in Schließrichtung s-s gemessen.

Zur Bewegung des beweglichen Formträgers ist ein Antrieb D vorgesehen, der den beweglichen Formträger in Schließrichtung s-s auf den stationären Formträger 10 zu und von diesem weg bewegt. Teil dieses Antriebs D ist außer den Zylindern 25 die Kolbenstange 26. Im vorliegenden Fall eines Dreiplattensystems (stationärer Formträger, beweglicher Formträger, Abstützelement) stützt sich die Kolbenstange 26 am Abstützelement 21 ab. Denkbar ist, den Schließmechanismus am stationären Formträger anzuordnen und dadurch ein Zweiplattensystem zu erhalten, wobei die Einrichtung zur Festlegung des Abstands a als Klemmeinrichtung 13 dem stationären Formträger 10 zugeordnet ist. Ferner kann der Antrieb D, der hier hydraulisch ist, z.B. elektromechanisch oder pneumatisch sein.

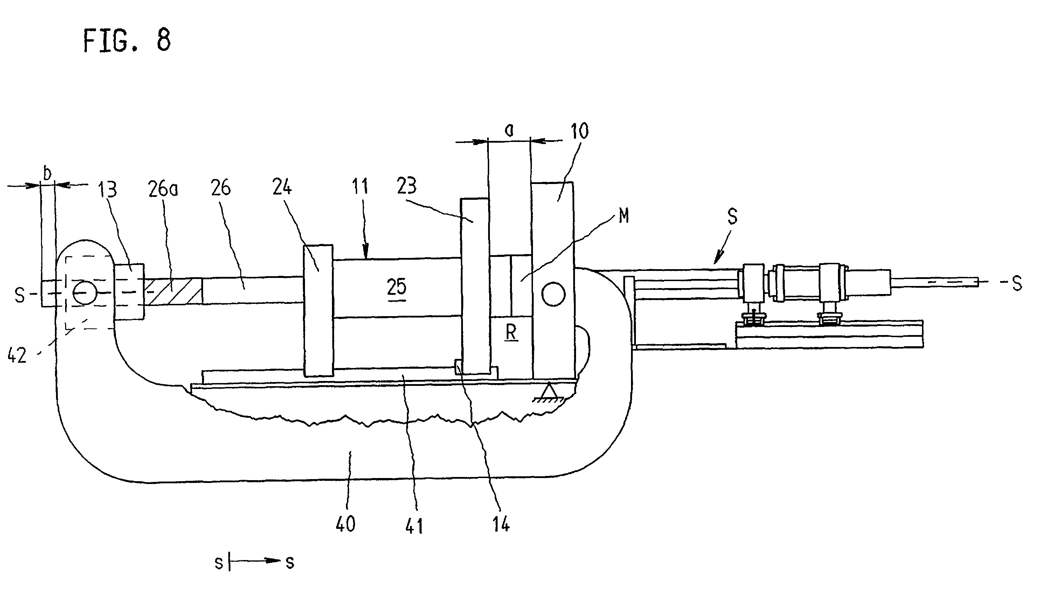

Als Führungssäulen (Holme) ausgebildete Führungselemente 12 durchgreifen in den Figuren 1 bis 3 den stationären Formträger 10 und den beweglichen Formträger 11. Sie dienen dem beweglichen Formträger 11 während seiner Bewegung als Führung und können, worauf unten näher einzugehen ist, auch dem Abstützelement 21 während seiner Bewegung als Führung dienen, wobei hierfür nur ein Abschnitt 12a des Führungselements 12 erforderlich ist, so daß bei anderweiter Führung des beweglichen Formträgers 11 auf das restliche Führungselement verzichtet werden kann (Fig. 8). Das Abstützelement 21 ist im Ausführungsbeispiel gegenüber dem Maschinenfuß in Schließrichtung s-s beweglich gelagert, was durch das Symbol für die entsprechende bewegliche Lagerung angedeutet ist. Die Führungselemente 12 weisen wenigstens einen Abschnitt 12a auf, mit dem die Klemmeinrichtung 13 in Wirkverbindung tritt, sobald der gewünschte Abstand a zwischen stationärem Formträger 10 und beweglichem Formträger 11 eingestellt ist.

Ergänzend wird dem beweglichen Formträger 11 eine Feststelleinrichtung 14 zugeordnet, die bei Betätigung den beweglichen Formträger 11 in seiner jeweiligen Stellung festlegt. Dieses Festlegen kann wie im Ausführungsbeispiel an den Führungselementen 12 erfolgen, denkbar ist jedoch auch eine Festlegung des beweglichen Formträgers am Maschinenfuß oder an einer anderen geeigneten stationären Stelle. Sobald dieses Festlegen des beweglichen Formträgers erfolgt ist, kann der Antrieb D, der üblicherweise Bestandteil der Schließeinrichtung zum Bewegen des beweglichen Formträgers 11 und gegebenenfalls zum Aufbringen der Schließkraft ist, bei betätigter Feststelleinrichtung 14 und außer Wirkverbindung befindlicher Klemmeinrichtung 13 das Abstützelement 21 entlang seiner Führung, hier entlang den Abschnitten 12a der Führungselemente 12 bewegen und dadurch für die folgenden Spritzzyklen den Abstand a verändern. Dies zeigen die Figuren 1 bis 3.

In Figur 1 ist die Klemmeinrichtung 13 an den Führungselementen 12 fixiert. Zugleich ist die Feststelleinrichtung 14 geöffnet, was der Abstand der Klemmbacken zu den Führungselementen 12 in Fig. 1 verdeutlicht. in diesem Zustand kann der bewegliche Formträger entlang den Führungselementen durch den Antrieb D bewegt werden, wobei eine Optimierung im Hinblick auf den Abstand a der in Fig. 1 dargestellten kleinen Form M erfolgt.

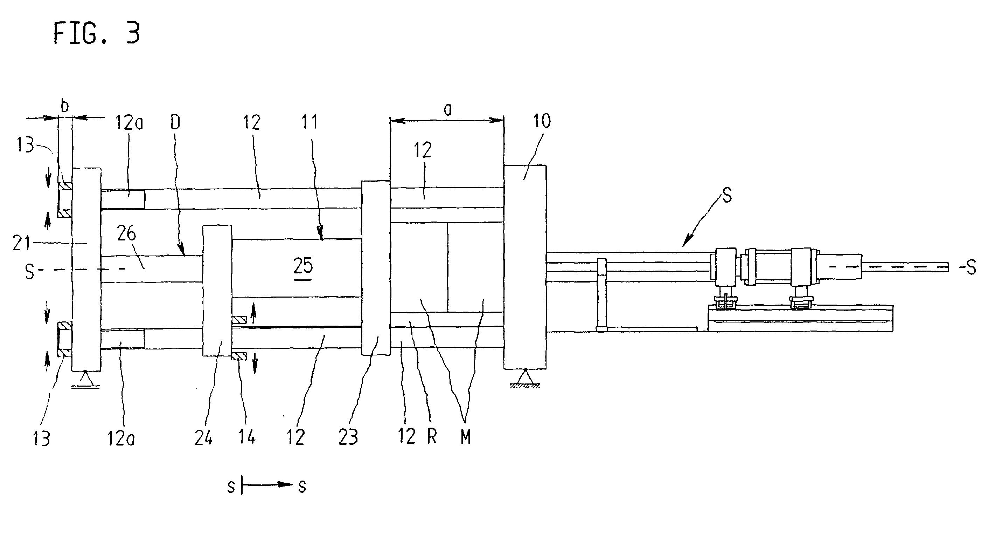

In Fig. 2 wird eine größere Spritzgleßform M in den Formspannraum R überführt. Hierbei befindet sich das Abstützelement 21 noch in der Position von Fig. 1. Es wird deutlich, daß in diesem Zustand keine ausreichende Öffnungsbewegung für die Spritzgießform M bewerkstelligt werden kann. Daher wird, wie durch die Pfeile angedeutet, die Feststelleinrichtung 14 verriegelt, wodurch der bewegliche Formträger in seiner Position festgehalten wird. Anschließend wird die Klemmeinrichtung 13, die jedem Führungselement 12 zugeordnet ist, entriegett. Wird jetzt der Antrieb D betätigt, ergibt sich keine Bewegung des beweglichen Formträgers, weil dieser verklemmt ist. Stattdessen wird das Abstützelement 21 in Schließrichtung bewegt, so daß sich eine Stellung des Abstützelements gemäß Fig. 3 ergibt, die an die entsprechende Formhöhe angepaßt ist. Um wieder einen Spritzgießprozeß zu ermöglichen, wird das Abstützelement 21 mit der Klemmeinrichtung 13 verriegelt und die Feststelleinrichtung 14 entriegelt. Nun kann angepaßt an die geänderte Formhöhe der weitere Herstellungsprozeß von Spritzgießteilen erfolgen.

Genaugenommen wird der Abstand a zwischen stationärem Formträger 10 und beweglichem Formträger 11 durch den Antrieb D eingestellt, der bei einer kleinen Spritzgießform mit geringer Formhöhe einen größeren Bewegungsweg zurücklegen muß als bei einer Spritzgleßform mit großer Formhöhe. Unterstellt man jedoch einen unveränderten Bewegungsweg des beweglichen Formträgers 11 findet eine Veränderung des Abstands a statt, wie ein Vergleich zwischen den Fig. 1 und 3 zeigt. Verändert hat sich auch der Abstand zwischen Abstützelement 21 und stationärem Formträger 10 sowie die Länge b der übsr das Abstützelement hinausragenden Führungselemente 12. Insofern könnte auch von einer Verstelleinrichtung zur Verstellung der Länge b der überstehenden Führungselemente 12 unter Optimierung der Ölmenge bei unverändertem Bewegungsweg des Antriebs D gesprochen werden.

Selbstverständlich muß die Feststelleinrichtung 14 nur an einem beliebigen Teil des beweglichen Formträgers angeordnet sein, wobei sie eine einzige oder mehrere Feststelleinrichtungen umfassen kann. Im Ausführungsbeispiel erfolgt die Anordnung an der Spannplatte 24, die Anordnung kann jedoch auch unmittelbar an der Formaufspannplatte 23 erfolgen. Es ist nur sicherzustellen, daß die Bewegung des beweglichen Formträgers durch die Feststelleinrichtung vorübergehend unterbunden werden kann.

Der Abschnitt 12a des Führungselements 12 weist einen veränderten Querschnitt auf, wobei diese Querschnittsveränderung dazu beitragen soll, daß eine formschlüssige Wirkverbindung mit der Klemmeinrichtung 13 zur Festlegung des Abstands a erfolgen kann. Ein spielfreier Formschluß ist an dieser Stelle erwünscht, da hohe Kräfte während des Spritzzyklus aufgebracht werden müssen, denen die Klemmeinrichtung 13 gewachsen sein muß. Die Querschnittsveränderung können Rillen oder im Ausführungsbeispiel ein Gewinde 12b sein. Ein Gewinde hat den Vorteil, daß es sich aufgrund der kontinuierlichen Hersteltung beim Gewindeschneiden sehr präzise herstellen läßt. Bei der Foststelleinrichtung 14 hingegen erfolgt eine kraftschlüssige Festlegung, da während des Spritzzyklus diese Einrichtung geöffnet ist und nur während der Nebenfunktion der Formhöhenverstellung geringe Kräfte aufgebracht werden, wofür die kraftschlüssige Verbindung genügt.

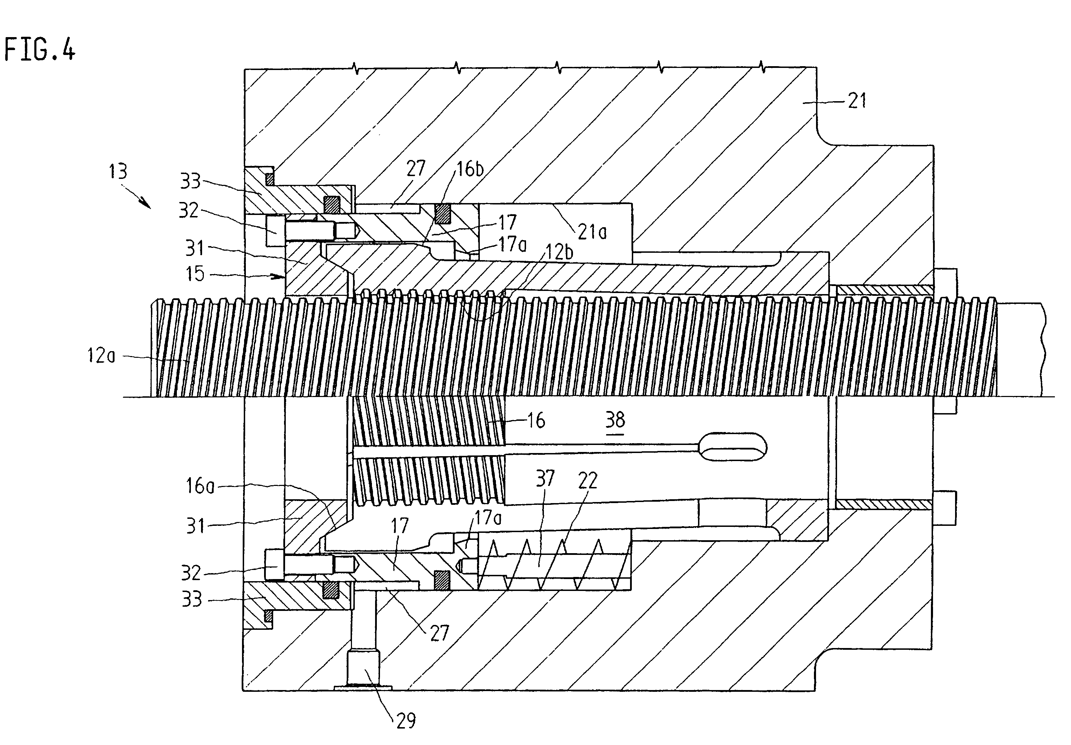

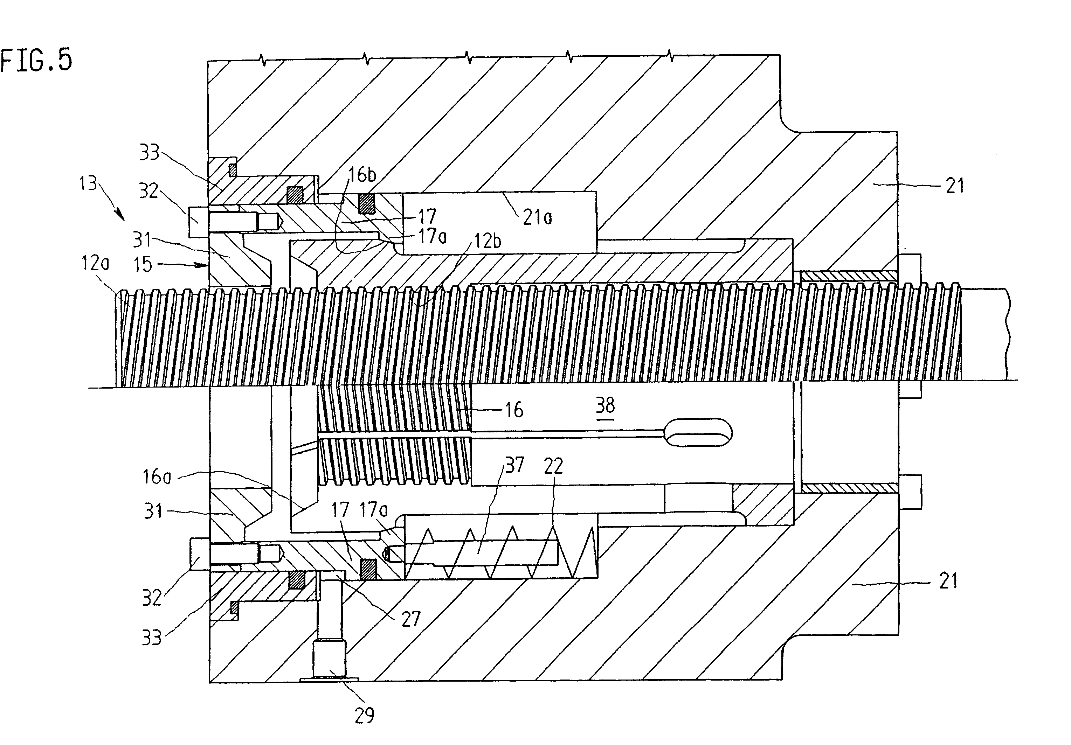

Die Figuren 4 und 5 zeigen bevorzugte Ausführungsformen der Klemmeinrichtung 13 zur spielfreien Festlegung des Abstands a. Als Ktemmeinrichtung 13 wird ein Betätigungselement 15 für eine erste Spannzange 38 vorgesehen, das koaxial zu den Führungselementen 12 im Bereich des Abschnitts 12a angeordnet ist. Die Spannzange besitzt eine Gewindehülse 16, die bei Betätigung der Spannzange mit dem Gewinde 12b des Abschnitts 12a in formschlüssige Wirkverbindung tritt. Die Klemmeinrichtung 13 ist so aufgebaut, daß sie selbsttätig unter der Kraft eines an Stiften 37 gehaltenen elastischen Mittels 22 in verriegelter Stellung bleibt. Das Entriegeln zur Formhöhenverstellung bzw. zur Veränderung des Abstands a erfolgt unter Einwirkung eines hydraulischen Mediums. Dieses hydraulische Medium wird über den Hydraulikanschluß 29 in die ringförmige Hydraulikkammer 27 geleitet Wie ein Vergleich zwischen Fig. 4 und 5 verdeutlicht, führt diese hydraulische Beaufschlagung zu einer axialen Bewegung des Ringkolbens 17 gegen die Kraft der elastischen Mittel 22. Hierbei geraten der konusförmige Abschnitt 17a des Ringkolbens 17 außer Eingriff und der konusförmige Bereich 16a der Spannzange 38 in Eingriff. In der Folge wird die Gewindehülse 16 durch den Konusring 31 aufgeweitet und eine Relativbewegung zwischen Abstützelement 21 und Führungselement 12 ermöglicht. Wird der Hydraulikdruck in der Hydraulikkammer 27 abgebaut, ergibt sich infolge der in der Ausnehmung 21a des Abstützelements 21 gelagerten elastischen Mittel 22 eine Rückstellung des Ringkolbens 17 in eine Stellung gemäß Fig. 5. Bei dieser Bewegung wird mit dem Ringkolben 17 der über Befestigungsmittel 32 mit diesem verbundene Konusring 31 ebenfalls axial bewegt. Andererseits endet die Bewegung des (Doppel-)Ringkolbens 17 durch das Aufeinanderlaufen des konusförmigen Bereichs 16b und des konusförmigen Abschnitts 17a. Die Hydraulikkammer 27 ist in axialer Richtung noch durch ein Abschlußelement 33 begrenzt.

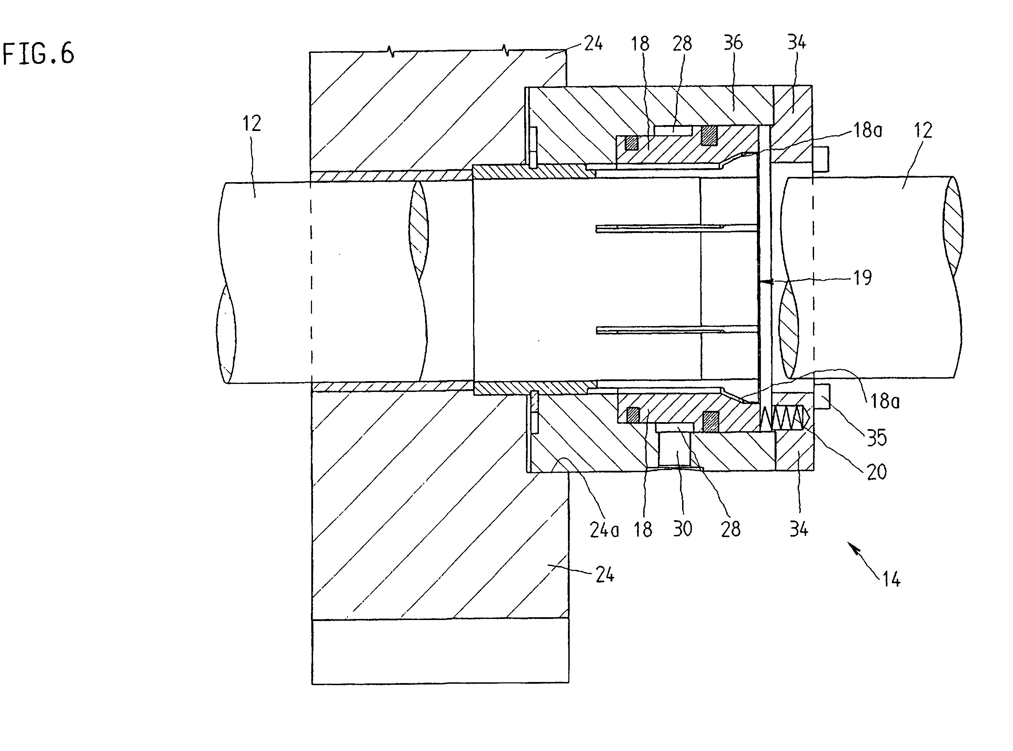

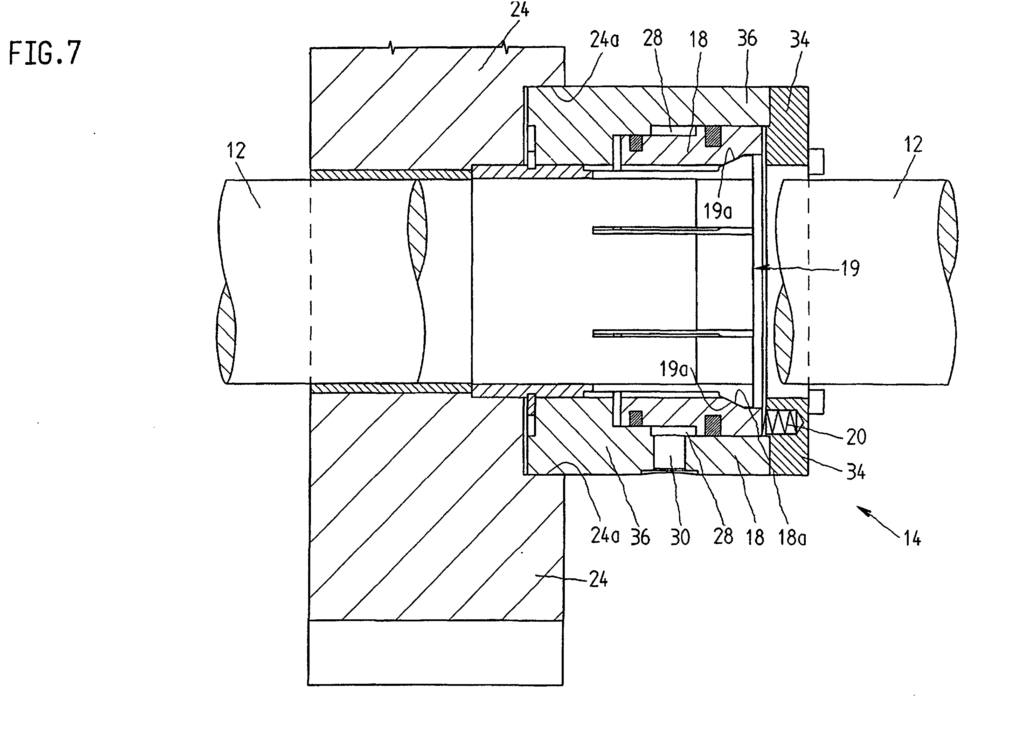

Die Figuren 6 und 7 zeigen die Feststelleinrichtung 14. Diese Feststelleinrichtung 14 weist eine zweite Spannzange 19 auf, die im Ausführungsbeispiel koaxial zu einem Führungselement 12 angeordnet ist und am beweglichen Formträger 11, genauer gesagt an der Spannplatte 24 in einer Ausnehmung 24a festgelegt ist. Die Feststelleinrichtung besitzt ein Gehäuse 36, das eine Hydraulikkammer 28 radial nach außen umschließt, die über einen Hydraulikanschluß 30 mit Hydraulikmedium beaufschlagbar ist. Die zweite Spannzange 19 weist einen konusförmigen Bereich 19a auf, der mit einem konusförmigen Abschnitt 18a des hydraulisch betätigten Ringkolbens 18 die Klemmung bewirkt. Hier erfolgt die Rückstellung in die nicht geklemmte Stellung unter Wirkung eines weiteren elastischen Mittels 20. Wie ein Vergleich zwischen Fig. 6 und 7 verdeutlicht, wird die Bewegung des Ringkolbens einerseits durch einen Anschlag am Gehäuse 36 begrenzt und andererseits durch das in Anlage Kommen von konusförmigem Abschnitt 18a und konusförmigem Bereich 19a begrenzt. Das elastische Mittel 20 ist in einem Abschlußelement 34 gelagert, das mit dem Gehäuse 36 über Befestigungsmittel 35 verbunden ist.

Fig. 8 zeigt ein weiteres Ausführungsbeispiel, das zunächst verdeutlicht, daß als Führungselement auch die Kolbenstange 26 des Antriebs dienen kann, die über einen Abschnitt 26a, der insofern dem bisher erwähnten Abschnitt 12a gleichzusetzen ist, mit der Klemmeinrichtung 13 in formschlüssige Wirkverbindung tritt.

Fig. 8 zeigt auch, daß ein Einsatz von Klemmeinrichtung 13 und Feststelleinrichtung 14 auch an einer holmtosen Maschine möglich ist, bei der anstelle von Führungssäulen ein Kraftübertragungseiement 40 die beim Spritzgießen auftretenden Kräfte um den Formspannraum R zur Erzielung einer besserer Zugänglichkeit herumleitet. Dieses gegebenenfalls auch mehrteilige Kraftübertragungselement ist einerseits am stationären Formträger 10 angelenkt. Andererseits stützt sich an dessen gegenüberliegenden, dem beweglichen Formträger 11 zugeordneten Ende 42 der Antrieb D ab. Hier kann die Klemmeinrichtung 13 vorgesehen werden, die mit dem Abschnitt 26a zusammenwirkt. Ist die Klemmeinrichtung 13 geöffnet und die am Führungselement 41 angreifende Feststelleinrichtung 14 verriegelt kann der Antrieb D den Abschnitt 26a der Kolbenstange 26 relativ zur klemmeinrichtung verschieben. Dadurch ergeben sich für folgende Spritzzyklen veränderte Bewegungswege des beweglichen Formträgers.

## Patentansprüche

1. Formschließeinheit für eine Spritzgießmaschine zur Verarbeitung von Kunststoffen und anderer plastifizierbarer Massen, mit
- einem stationären Formträger (10),
- einem beweglichen Formträger (11), der zwischen sich und dem stationären Formträger (10) einen Formspannraum (R) zur Aufnahme von Spritzgießformen (M) veränderlicher Höhe, gemessen in einer Schließrichtung (s-s), aufweist,
- einem Antrieb (D) zum Bewegen des beweglichen Formträgers (11) in Schließrichtung (s-s) auf den stationären Formträger (10) zu und vom stationären Formträger weg, der wenigstens zwei miteinander in Wirkverbindung stehende Teile aufweist, von denen ein Teil an einem Abstützelement (21) abgestützt ist und das andere Teil mit dem beweglichen Formträger (11) verbunden ist,
- Führungselementen (12), die den beweglichen Formträger (11) während seiner Bewegung in Schließrichtung (s-s) führen, mit wenigstens einem Abschnitt (12a,26a),
- einer Einrichtung zur veränderlichen Festlegung des Abstands (a) zwischen stationärem Formträger (10) und beweglichem Formträger (11) gemessen bei geschlossener Spritzgießform (M) und unter Annahme eines gegenüber dem Zustand vor Veränderung des Abstands (a) unveränderten Bewegungswegs des beweglichen Formträgers in Form einer klemmeinrichtung (13), welche Klemmeinrichtung (13) zur Festlegung des eingestellten Abstandes (a) mit dem Abschnitt (12a,26a) der Führungselemente (12) in formschlüssige Wirkverbindung tritt,
- einer dem beweglichen Formträger (11) zugeordneten Feststelleinrichtung (14), die bei Betätigung den beweglichen Formträger (11) in seiner jeweiligen Stellung festlegt,
- wobei der Antrieb (D) selbst bei betätigter Feststelleinrichtung (14) und außer Wirkverbindung befindlicher Ktemmeinrichtung (13) den Abstand (a) durch Verschieben der Klemmeinrichtung (13) entlang des Abschnittes (12a,26a) verändert,
**dadurch gekennzeichnet, dass** sich wenigstens eines der beiden Teile des Antriebs (D) zur Bewegung des beweglichen Formträger (11) auch bei der Schließbewegung linear in Schließrichtung erstreckt.

2. Formschließeinheit nach Anspruch 1, **dadurch gekennzeichnet, dass** der Antrieb (D) ein Hydraulikantrieb ist und dass die Teile des Antriebs (D) Zylinder (25) und Kolbenstange (26) einer hydraulischen Kolben-Zylinder-Einheit sind.

3. Formschließeinheit nach Anspruch 1, **dadurch gekennzeichnet, dass** der Antrieb (D) ein elektromechanischer Antrieb.

4. Formschließeinheit nach Anspruch 1, **dadurch gekennzeichnet, dass** der Abstand (a) unter wechselweiser Betätigung von Klemmeinrichtung (13) und Feststelleinrichtung (14) in Verbindung mit dem Antrieb (D) veränderbar ist.

5. Formschließeinheit nach Anspruch 1, **dadurch gekennzeichnet, dass** die Klemmeinrichtung (13) eine erste Spannzange (37) aufweist, die koaxial zum Führungselement (12) im Bereich des Abschnitts (12a) angeordnet ist und mit dem Abschnitt (12a) in formschlüssige, spielfreie Wirkverbindung überführbar ist.

6. Formschließeinheit nach Anspruch 5, **dadurch gekennzeichnet, daß** die erste Spannzange (38) einen konusförmigen Bereich (16a) aufweist, der zur Lösung der Spannung hydraulisch in Wirkverbindung mit einem mit einem Ringkolben (17) verbundenen Konusring (31) und unter der Kraft eines elastischen Mittels (22) außer Wirkverbindung mit dem Konusring kommt, wobei der Ringkolben (17) entlang des Führungselement (12) begrenzt axial beweglich ist.

7. Formschließeinheit nach Anspruch 1, **dadurch gekennzeichnet, daß** derAbschnitt (12a) der Führungselemente (12) zur formschlüssigen Wirkverbindung mit einer Gewindehülse (16) der Klemmeinrichtung (13) ein Gewinde (12b) aufweist.

8. Formschließeinheit nach Anspruch 1, **dadurch gekennzeichnet, daß** die betätigte Feststelleinrichtung (14) den beweglichen Formträger (11) an den Führungselementen (12) kraftschlüssig festlegt.

9. Formschließeinheit nach Anspruch 1, **dadurch gekennzeichnet, daß** die Feststelleinrichtung (14) eine zweite Spannzange (19) aufweist, die koaxial zu einem Führungselement (12) angeordnet und am beweglichen Formträger (11) festgelegt ist.

10. Formschließeinheit nach Anspruch 9, **dadurch gekennzeichnet, daß** die zweite Spannzange (19) einen konusförmigen Bereich (19a) aufweist und daß ein zweiter hydraulisch betätigter Ringkolben (18) mit einem konusförmigen Abschnitt (18a) bei hydraulischer Beaufschlagung die Klemmung mit dem konusförmigen Bereich (19a) bewirkt, welcher Ringkolben (18) vorzugsweise über ein weiteres elastisches Element (20) rückstellbar ist.

11. Formschließeinheit nach Anspruch 1, **dadurch gekennzeichnet, daß** die Klemmeinrichtung (13) dem Abstützelement (21) zugeordnet ist.

12. Formschließeinheit nach Anspruch 1, **dadurch gekennzeichnet, daß** das Führungselement eine Kolbenstange (26) des Antriebs ist, die über einen Abschnitt (26a) mit der Klemmeinrichtung (13) in Wirkverbindung tritt.

13. Formschließeinheit nach Anspruch 1, **dadurch gekennzeichnet, daß** am stationären Formträger (10) ein Kraftübertragungselement (40) angelenkt ist, an dessen gegenüberliegenden, dem beweglichen Formträger (11) zugeordneten Ende (42) die Klemmeinrichtung (13) angeordnet ist, die mit dem Abschnitt (26a) zusammenwirkt.

## Claims

1. Mould-closing unit for an injection moulding machine for processing plastics materials and other plasticizable masses, having
- a stationary mould carrier (10),
- a moveable mould carrier (11) which has between itself and the stationary mould carrier (10) a mould tentering space (R) to accommodate injection moulds (M) of variable height, measured in a closing direction (s-s),
- a drive (D) to move the moveable mould carrier (11) in the closing direction (s-s) towards the stationary mould carrier (10) and away from the stationary mould carrier, which drive has at least two parts operationally connected to one another, of which one part is supported on a support element (21), and the other part is connected to the moveable mould carrier (11),
- guide elements (12) which guide the moveable mould carrier (11) during its movement in the closing direction (s-s), having at least one portion (12a, 26a)
- a device for variably fixing the spacing (a) between the stationary mould carrier (10) and the moveable mould carrier (11) measured with the injection mould (M) closed and assuming a movement path of the moveable mould carrier unaltered in relation to a state before alteration of the spacing (a), which device is a clamping device (13) and enters operational positive connection with the portion (12a, 26a) of the guide elements (12) to fix the spacing (a) set,
- a fixing device (14) allocated to the moveable mould carrier (11) which, on actuation, fixes the moveable mould carrier (11) in its respective position,
- wherein drive (D), when the fixing device (14) is actuated and the clamping device (13) is out of operational connection, itself alters the spacing (a) by displacing the clamping device (13) along portion (12a, 26a),
**characterised in that** at least one of the two parts of the drive (D) for the movement of the moveable mould carrier (11) extends in a linear manner in the closing direction even during the closing movement.

2. Mould-closing unit according to claim 1, **characterised in that** the drive (D) is a hydraulic drive and that the parts of the drive (D) are the cylinder (25) and piston rod (26) of a hydraulic piston-cylinder unit.

3. Mould-closing unit according to claim 1, **characterised in that** the drive (D) is an electromechanical drive.

4. Mould-closing unit according to claim 1, **characterised in that**, in connection with the drive (D), the spacing (a) is variable by alternate actuation of the clamping device (13) and of the fixing device (14).

5. Mould-closing unit according to claim 1, **characterised in that** the clamping device (13) has a first collet chuck (37) which is disposed coaxially to the guide element (12) in the region of portion (12a) and can be transferred with portion (12a) into positive operational connection free from play.

6. Mould-closing unit according to claim 5, **characterised in that** the first collet chuck (38) has a conical region (16a) which, in order to release the tension, comes hydraulically into operational connection with a cone ring (31) connected to an annular piston (17) and comes out of operational connection under the force of resilient means (22), the annular piston (17) being axially moveable to a limited extent along the guide element (12).

7. Mould-closing unit according to claim 1, **characterised in that** portion (12a) of the guide elements (12) has a thread (12b) to form a positive operational connection with a threaded bush (16) of the clamping device (13).

8. Mould-closing unit according to claim 1, **characterised in that** the actuated fixing device (14) fixes the moveable mould carrier (11) in a non-positive manner to the guide elements (12).

9. Mould-closing unit according to claim 1, **characterised in that** the fixing device (14) has a second collet chuck (19) which is disposed coaxially to a guide element (12) and is fixed on the moveable mould carrier (11).

10. Mould-closing unit according to claim 9, **characterised in that** the second collet chuck (19) has a conical region (19a) and **in that** a second hydraulically actuated annular piston (18) with a conical portion (18a) effects the clamping with the conical region (19a) when hydraulic pressure is applied, wherein the additional annular piston (18) is preferably to be reset via an additional resilient element (20).

11. Mould closing unit according to claim 1, **characterised in that** the clamping device (13) is allocated to the support element (21).

12. Mould-closing unit according to claim 1, **characterised in that** the guide element is a piston rod (26) of the drive, which rod comes into operational connection with the clamping device (13) via a portion (26a).

13. Mould-closing unit according to claim 1, **characterised in that** there is hinged to the stationary mould carrier (10) a force transmission element (40), at the opposite end (42) of which, associated with the moveable mould carrier (11), is disposed the clamping device (13) which co-operates with portion (26a).

## Revendications

1. Unité de fermeture de moule pour une machine à mouler par injection pour le traitement de matières plastiques et d'autres masses plastifiables, comportant :
- un porte-moule (10) fixe,
- un porte-moule (11) mobile qui comporte, entre lui-même et le porte-moule fixe (10), un espace de serrage de moule (R) pour recevoir des moules d'injection (M) de hauteur variable, mesurée dans un sens de fermeture (s-s),
- un dispositif d'entraînement (D) pour le déplacement du porte-moule mobile (11) dans le sens de fermeture (s-s) vers le porte-moule fixe (10) et à partir du porte-moule fixe, qui comporte au moins deux parties en liaison active entre elles, dont une partie est soutenue contre un élément d'appui (21) et l'autre partie est reliée au porte-moule mobile (11),
- les éléments de guidage (12) qui guident le porte-moule mobile (11) pendant son déplacement dans le sens de fermeture (s-s), avec au moins un tronçon (12a, 26a),
- un dispositif pour la fixation variable de la distance (a) entre le porte-moule fixe (10) et le porte-moule mobile (11), mesurée alors que le moule d'injection (M) est fermé et en admettant une course de déplacement non modifiée du porte-moule mobile, par rapport à l'état avant variation de la distance (a), sous la forme d'un dispositif de serrage (13), lequel vient en liaison active par complémentarité de forme avec le tronçon (12a, 26a) des éléments de guidage (12),
- un dispositif de blocage (14), associé au porte-moule mobile (11), qui, lorsqu'il est actionné, fixe le porte-moule mobile (11) dans sa position respective,
- le dispositif d'entraînement (D) lui-même faisant varier la distance (a), lorsque le dispositif de blocage (14) est actionné et le dispositif de serrage (13) se trouve hors liaison active, par coulissement du dispositif de serrage (13) le long du tronçon (12a, 26a),
**caractérisée en ce qu'**au moins l'une des deux parties du dispositif d'entraînement (D) pour le déplacement du porte-moule mobile (11) s'étend aussi linéairement dans le sens de fermeture pendant le mouvement de fermeture.

2. Unité de fermeture de moule selon la revendication 1, **caractérisée en ce que** le dispositif d'entraînement (D) est un dispositif d'entraînement hydraulique et **en ce que** les parties du dispositif d'entraînement (D) sont le cylindre (25) et la tige de piston (26) d'une unité hydraulique à cylindre et piston.

3. Unité de fermeture de moule selon la revendication 1, **caractérisée en ce que** le dispositif d'entraînement (D) est un dispositif d'entraînement électromécanique.

4. Unité de fermeture de moule selon la revendication 1, **caractérisée en ce que** la distance (a) est variable par actionnement alterné du dispositif de serrage (13) et du dispositif de blocage (14) en combinaison avec le dispositif d'entraînement (D).

5. Unité de fermeture de moule selon la revendication 1, **caractérisée en ce que** le dispositif de serrage (13) comporte une première pince de serrage (37) qui est disposée coaxialement à l'élément de guidage (12) dans la zone du tronçon (12a) et que l'on peut faire passer en liaison active par complémentarité de forme et sans jeu avec le tronçon (12a).

6. Unité de fermeture de moule selon la revendication 5, **caractérisée en ce que** la première pince de serrage (38) présente une zone (16a) en forme de cône qui, pour supprimer le serrage, vient en liaison active, hydrauliquement, avec un anneau de cône (31) relié à un piston annulaire (17), et passe hors liaison active avec l'anneau de cône, par la force d'un moyen élastique (22), le piston annulaire (17) étant mobile axialement, de manière limitée, le long de l'élément de guidage (12).

7. Unité de fermeture de moule selon la revendication 1, **caractérisée en ce que** le tronçon (12a) des éléments de guidage (12) présente un filetage (12b) pour la liaison active par complémentarité de forme avec une douille taraudée (16) du dispositif de serrage (13).

8. Unité de fermeture de moule selon la revendication 1, **caractérisée en ce que** le dispositif de blocage (14) actionné fixe à force le porte-moule mobile (11) sur les éléments de guidage (12).

9. Unité de fermeture de moule selon la revendication 1, **caractérisée en ce que** le dispositif de blocage (14) comporte une deuxième pince de serrage (19) qui est disposée coaxialement à un élément de guidage (12) et qui est fixée sur le porte-moule mobile (11).

10. Unité de fermeture de moule selon la revendication 9, **caractérisée en ce que** la deuxième pince de serrage (19) présente une zone (19a) en forme de cône et **en ce qu'**un deuxième piston annulaire (18), actionné de manière hydraulique, provoque, par un tronçon (18a) en forme de cône, par action hydraulique, le serrage avec la zone (19a) en forme de cône, lequel piston annulaire (18) pouvant être rappelé de préférence par un autre élément élastique (20).

11. Unité de fermeture de moule selon la revendication 1, **caractérisée en ce que** le dispositif de serrage (13) est associé à l'élément d'appui (21).

12. Unité de fermeture de moule selon la revendication 1, **caractérisée en ce que** l'élément de guidage est une tige de piston (26) du dispositif d'entraînement qui est en liaison active avec le dispositif de serrage (13), par un tronçon (26a).

13. Unité de fermeture de moule selon la revendication 1, **caractérisée en ce qu'**au porte-moule fixe (10) est articulé un élément de transmission de force (40) à l'extrémité opposée (42) duquel, associée au porte-moule mobile (11), est disposé le dispositif de serrage (13) qui coopère avec le tronçon (26a).
